# EUROPÄISCHE PATENTANMELDUNG

(11) **EP 2 525 310 A1**
(43) Veröffentlichungstag der Anmeldung: **21.11.2012**
(21) Anmeldenummer: 12002244.7
(22) Anmeldetag: 28.03.2012
(51) Int. Cl.: G06Q 10/02, G06Q 30/06, B62H 5/00

(54) **Verfahren zum automatisierten Verwalten und Bevorraten von Mietobjekten**

(30) Priorität: 17.05.2011 DE 102011101817
(71) Anmelder: DB Rent GmbH, 60327 Frankfurt/Main (DE)
(72) Erfinder: Reth, Philipp, 10405 Berlin (DE)
(74) Vertreter: Zinken-Sommer, Rainer

(57) **Zusammenfassung**

Die Erfindung betrifft ein Verfahren zum automatisierten Verwalten und Bevorraten von Mietobjekten an einem Zwischenlagerungsort, bei dem eine zur Blockierung des Mietobjektes gegen unberechtigte Benutzung geeignete Sperrvorrichtung (A) über eine erste Kommunikationsverbindung von einer lokalen Kontrolleinrichtung (B) am Zwischenlagerungsort angesteuert wird sowie eine selektive Authorisierung von Mietvorgängen in einer mit der lokalen Kontrolleinrichtung über eine zweite Kommunikationsverbindung verbundenen Verwaltungseinrichtung (C) erfolgt. Die Erfindung soll eine Reduzierung des Energiebedarfs der Sperrvorrichtung ermöglichen und zugleich die Anforderungen an die Wartungsintensität der Mietobjekte reduzieren.

Hierzu ist vorgesehen, dass ein von der Verwaltungseinrichtung (C) generiertes und über die zweite Kommunikationsverbindung an die lokale Kontrolleinrichtung (B) am Zwischenlagerungsort übertragenes Signal (1) zur Kennzeichnung einer erfolgreichen Authorisierung eines Mietvorgangs über ein konkretes Mietobjekt in der lokalen Kontrolleinrichtung zwischengespeichert (2) und erst nach Empfangen eines von der diesem Mietobjekt zugeordneten Sperrvorrichtung (A) an die lokale Kontrolleinrichtung ausgesandten Aktivierungssignals (3) ein Steuerungssignal (4) zur Öffnung der Sperrvorrichtung von der lokalen Kontrolleinrichtung über die erste Kommunikationsverbindung an diese Sperrvorrichtung übertragen wird.

## Beschreibung

Die Erfindung betrifft ein Verfahren zum automatisierten Verwalten und Bevorraten von Mietobjekten an einem Zwischenlagerungsort, bei dem eine zur Blockierung des Mietobjektes gegen unberechtigte Benutzung geeignete Sperrvorrichtung über eine erste Kommunikationsverbindung von einer lokalen Kontrolleinrichtung am Zwischenlagerungsort angesteuert wird sowie eine selektive Autorisierung von Mietvorgängen in einer mit der lokalen Kontrolleinrichtung über eine zweite Kommunikationsverbindung verbundenen Verwaltungseinrichtung erfolgt.

Derartige automatisierte Vermietsysteme sind in zahlreichen Ausführungsvarianten bekannt. So gibt es beispielsweise in den Innenstadt-Bereichen großer Städte Fahrrad-Vermietsysteme mit einer Mehrzahl von dezentral im Stadtbereich verteilten Mietstationen, an denen Fahrräder zum Zwecke der Vermietung an Passanten bereitgehalten werden. Üblicherweise umfasst eine solche Mietstation ein stationäres Terminal sowie eine Mehrzahl von stationären Schließvorrichtungen, an denen jeweils einzelne Fahrräder zur Vermietung bereit gehalten werden. Die Terminals weisen jeweils Ein-Ausgabeeinheiten auf, über die sich die Kunden identifizieren sowie die für den Vermietvorgang relevanten Transaktionen, wie z.B. die Auswahl des zu mietenden Fahrrades sowie Bezahlvorgänge, mit dem Vermietsystem abwickeln können. Sobald das Vermietsystem einen Kunden identifiziert und einen von diesem Kunden initiierten Vermiet-Vorgang autorisiert hat, wird an eine einem freien (d.h. unvermieteten) Fahrrad zugehörige stationäre Schließvorrichtung ein entsprechender Steuerungsbefehl zum Öffnen der Schließvorrichtung übermittelt. Alternativ hierzu sind bei manchen Fahrrad-Vermietsystemen die Schließvorrichtungen unmittelbar an den Fahrrädern montiert (und entweder an den Fahrrädern selbst oder an einem ortsfesten Gegenstück im Eingriff). Die Übergabe des Steuerungsbefehls erfolgt in solchen Fällen dann drahtlos vom Terminal an die Schließvorrichtung. Die Auswahl des Fahrrades erfolgt durch eine Ressourcen-Verwaltung des Fahrrad-Vermietsystems. Je nach konkreter Ausführung des Fahrrad-Vermietsystems kann diese Ressourcen-Verwaltung optional um eine Auswahlmöglichkeit durch den Kunden ergänzt sein.

Den nächstliegenden Stand der Technik hierzu beschreibt die WO 2005/068280 A1. Dort wird ein gattungsgemäßes System offenbart, bei dem die lokale Kontrolleinrichtung und die Schließvorrichtungen der Fahrräder zur Kommunikation über Kurzstreckenfunk ausgelegt sind. Die lokale Kontrolleinrichtung wiederum ist mit einem (räumlich abgesetzten) Server des Hintergrundsystems (= Verwaltungseinrichtung) verbunden und führt mit diesem die für eine selektive Autorisierung von Mietvorgängen notwendige Kommunikation. Gemäß der Lehre der WO 2005/068280 A1 können Mietanfragen von den Kunden mittels Mobilfunk unmittelbar an die Verwaltungseinrichtung des Hintergrundsystems adressiert werden, welches dann mittels der lokalen Kontrolleinrichtung das oder die zur Vermietung vorgesehenen Fahrräder entriegelt. Eine erfolgreich durchgeführte Entriegelung wird dem Kunden mittels einer blinkenden LED-Anzeige am Fahrrad signalisiert. Auf diese Weise soll der Kunde das von ihm gemietete Fahrrad auffinden können. In der Praxis hat es sich jedoch als nachteilig erwiesen, daß die Schließvorrichtungen der Fahrräder auch im abgestellten Zustand stets empfangsbereit sein müssen, um ein eventuelles von der lokalen Kontrolleinrichtung ausgesandtes Entriegelungssignal empfangen zu können. Der Energiebedarf hierfür ist zwar nominell gering, aber gleichwohl dauerhaft vorhanden. Dies führt dazu, daß die Energiespeicher der Schließvorrichtungen bzw. Fahrräder regelmäßig nachgeladen werden müssen. In Anbetracht der großflächigen räumlichen Verteilung der Fahrräder - z.B. über das gesamte Gebiet einer Stadt - resultiert hieraus ein erheblicher Aufwand für die Bereitstellung einsatzfähiger Fahrräder. Zudem erhöht der konstante Energiebedarf die Gefahr eines unentdeckten Ausfalls der Energieversorgung der Schließvorrichtung, was nicht nur zu einer verminderten Einsatzbereitschaft der gesamten Flotte von Miet-Fahrrädern sondern auch zu Fehlerzuständen bei auf einzelnen Mietvorgängen führen kann. So ist es beispielsweise möglich, dass ein Mietvorgang zwar autorisiert und für die Abrechnung erfaßt wurde, das Fahrrad aber mangels ausreichender Energieversorgung nicht mehr entriegelbar ist.

Zudem kann nach der Lehre der WO 2005/068280 A1 die korrekte Zuordnung zwischen dem Kunden und dem ihm von der Ressourcenverwaltung des Systems zugewiesenen Fahrrad Probleme bereiten. Insbesondere bei Fahrrad-Vermietsystemen, welche keine fixen Stellplätze aufweisen, sondern bei denen die Fahrräder lediglich innerhalb einer markierten Stellzone abgestellt und mit sich selbst verriegelt werden, ist der nutzende Kunde an stärker frequentierten Vermietorten mit einer Vielzahl abgestellter Fahrräder konfrontiert. Zwar wird dem Kunden nach der Lehre des bisherigen Standes der Technik eine erfolgreich durchgeführte Entriegelung mittels einer blinkenden LED-Anzeige am Fahrrad signalisiert. Allerdings ist es dennoch möglich, dass ihm die Identifikation des Fahrrades nicht in allen Fällen innerhalb einer hinreichend kurzen Zeitspanne sicher möglich ist. Solange der Kunde das freigeschaltene Fahrrad nicht als das ihm per Vermietvorgang Zugeordnete erkannt hat, steht dieses auch jedem Dritten zur (unbefugten) Entnahme aus dem Vermietsystem zur Verfügung.

Der Erfindung liegt deshalb die Aufgabe zugrunde, ein gattungsgemäßes Verfahren zum automatisierten Verwalten und Bevorraten von Mietobjekten an einem Zwischenlagerungsort bereitzustellen, welches eine Reduzierung des Energiebedarfs der Sperrvorrichtung ermöglicht und zugleich die Anforderungen an die Wartungsintensität der Mietobjekte reduziert. Des weiteren soll es die Gefahr nichteindeutiger Zuordnungen zwischen Mietobjekt und Mietkunde sowie der sich hieraus ergebenden Gefahr von fehlerhaften Abrechnungen bzw. von Einnahmeverlusten reduzieren.

Erfindungsgemäß wird diese Aufgabe in Verbindung mit dem Oberbegriff des Patentanspruches 1 dadurch gelöst, daß ein von der Verwaltungseinrichtung generiertes und über die zweite Kommunikationsverbindung an die lokale Kontrolleinrichtung am Zwischenlagerungsort übertragenes Signal zur Kennzeichnung einer erfolgreichen Autorisierung eines Mietvorgangs über ein konkretes Mietobjekt in der lokalen Kontrolleinrichtung zwischengespeichert und erst nach Empfangen eines von der diesem Mietobjekt zugeordneten Sperrvorrichtung an die lokale Kontrolleinrichtung ausgesandten Aktivierungssignals ein Steuerungssignal zur Öffnung der Sperrvorrichtung von der lokalen Kontrolleinrichtung über die erste Kommunikationsverbindung an diese Sperrvorrichtung übertragen wird.

Auf diese Weise wird vermieden, daß die Sperrvorrichtung des Mietobjektes über längere Zeiträume, d.h. während des gesamten Zeitraums, zu dem sich das Mietobjekt nicht in einem Mietverhältnis befindet, in einem Bereitschaftszustand für den Empfang eines an die Sperrvorrichtung gerichteten Steuerungssignals bereit gehalten und dauerhaft mit Energie versorgt werden muß. Statt dessen sieht das erfindungsgemäße Verfahren das Einbeziehen eines von der Sperrvorrichtung an die lokale Kontrolleinrichtung übertragenen Aktivierungssignals vor. Dieses Aktivierungssignal wird in der Sperrvorrichtung erzeugt, sobald die Sperrvorrichtung im Kontext einer auf das der Sperrvorrichtung jeweils zugeordnete Mietobjekt gerichteten Benutzungsanfrage aktiviert wird. Auf diese Weise wird auch eine eindeutige Zuordnung zwischen dem anfragenden Benutzer und dem jeweiligen Mietobjekt sichergestellt. Würde der Benutzer z.B. aus einem Irrtum heraus das Aktivierungssignal an einer anderen Sperrvorrichtung erzeugen, welche nicht demjenigen Mietobjekt zugehörig ist, für das im Vermietsystem ein diesem Benutzer zugeordneter Mietvorgang eröffnet wurde, so würde kein Öffnungssignal an das Mietobjekt übertragen werden. In einem solchen Fall würde somit auch kein abrechnungsfähiger Mietvorgang eröffnet werden.

Optional kann auch zusätzlich eine Zwischenpufferung des Aktivierungssignals in der lokalen Kontrolleinrichtung vorgesehen sein, wodurch die Synchronisierung beider erfindungsgemäß an die lokale Kontrolleinrichtung übertragener Signale vereinfacht wird. Auf diese Weise können die negativen Auswirkungen von in der Praxis unvermeidlichen Abweichungen bzw. Zeitversätze zwischen dem Aussenden des Signals zur Kennzeichnung der Autorisierung und dem Aussenden der Aktivierungsmeldung eliminiert werden.

Gemäß einer sinnvollen Ausgestaltungsvariante der Erfindung wird das Aktivierungssignal durch eine manuelle Bedienungshandlung eines Nutzers des Mietobjektes an der Sperrvorrichtung des Mietobjektes generiert. Diese Bedienungshandlung könnte beispielsweise im Betätigen eines Tasters bestehen, der die Sperrvorrichtung aus einem "stand by"-Modus aktiviert bzw. weckt. Auf diese Weise kann das erfindungsgemäße Verfahren auch bei solchen Vermietsystemen Anwendung finden, bei denen die Erfassung der für eine Authentifizierung und Autorisierung des Mietvorgangs notwendigen kundenspezifischen Daten über Ein-/Ausgabeschnittstellen der lokalen Kontrollvorrichtung oder der Verwaltungsvorrichtung erfolgt. Bei derartigen Ein-/Ausgabeschnittstellen kann es sich beispielsweise um Touch Screens der lokalen Kontrollvorrichtung (= vor Ort vorhandenes, stationäres "Bedienterminal") oder über Mobilfunk ansprechbare Kommunikationsschnittstellen der Verwaltungseinrichtung (= Server des Back-End-Systems) handeln.

Eine Weiterentwicklung der Erfindung sieht ferner vor, dass in der lokalen Kontrolleinrichtung beim Zwischenspeichern des Signals zur Kennzeichnung einer erfolgreichen Autorisierung ein Zeitglied aktiviert sowie bei fehlendem Empfang der Aktivierungsmeldung innerhalb einer mittels des Zeitglieds vorgebbaren Zeitspanne ein Signal zur Kennzeichnung eines Abbruchs des Mietvorganges über die zweite Kommunikationsverbindung an die Verwaltungseinrichtung übertragen wird. Auf diese Weise werden unklare Systemzustände vermieden, welche auf Grund von technischen Defekten einzelner an der Durchführung des erfindungsgemäßen Verfahrens beteiligter Baugruppen oder bedingt durch Bedienungsfehler auftreten können.

Der Erfindungsgedanke wird in nachfolgender Figur verdeutlicht. Es zeigt:

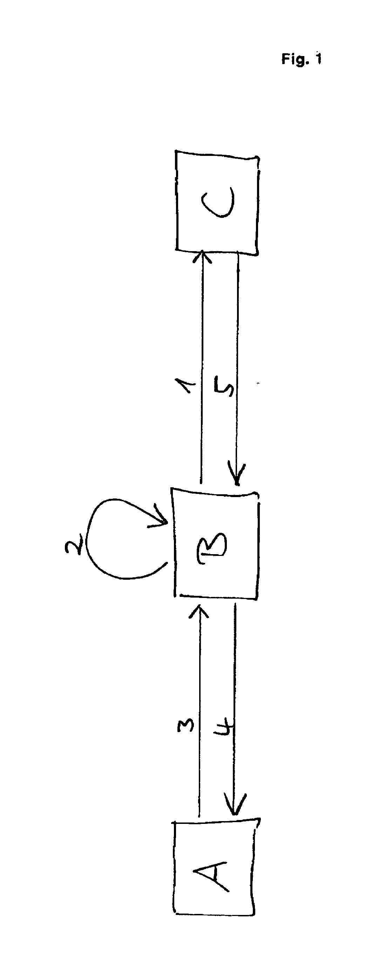

- **Figur 1**: Schemadarstellung des erfindungsgemäßen Verfahrensablaufs

In Figur 1 ist das erfindungsgemäße Zusammenwirken der Komponenten eines Fahrrad-Vermietsystems schematisch dargestellt.

Das Fahrrad-Vermietsystem umfaßt eine Vielzahl von Fahrrädern (= Mietobjekten), wobei jedem Fahrrad jeweils eine Sperrvorrichtung (A) zugeordnet ist. Es handelt sich hierbei um mit sich selbst verschließbares Fahrradschloß, wie es aus dem Stand der Technik bekannt ist. Die Vermietung der Fahrräder erfolgt an räumlich definierten Orten (= Zwischenlagerungsorten). Es handelt sich hierbei um öffentlich zugängliche Areale, z.B. an stark frequentierten Plätzen vor Bahnhöfen, in Fußgängerzonen etc... mit farblich markierten oder anderweitig baulich abgegrenzten bzw. definierten (z.B. mittel Betonpoller, Stelen etc.) Bereichen, innerhalb denen die Fahrräder zur Vermietung bereitgestellt sind bzw. zur Beendigung des Mietvorgangs abgestellt werden. Jedem solchen Zwischenlagerungsort ist eine lokale Kontrolleinrichtung (B) zugeordnet, z.B. in Form eines ortsfest installierten Terminals. Des weiteren verfügt das Vermietsystem über eine Verwaltungseinrichtung (C), die als "Back End" bzw. Hintergrundsystem ausgeführt sind. Die lokale Kontrolleinrichtung (B) verfügt über Datenkommunikationsverbindungen sowohl mit den Sperrvorrichtungen (A) der Fahrräder als auch mit der Verwaltungseinrichtung (C) im Back-End. Zur Vermeidung von Kabel- und Erdarbeiten sind diese Kommunikationsverbindung bevorzugt drahtlos ausgeprägt. Die Erfassung kundenspezifischer Daten, die für eine Authentifzierung und Autorisierung von Mietanfragen benötigt werden, kann auf verschiedene Arten erfolgen. Eine erste Ausführungsvariante sieht die Erfassung dieser Daten durch die Sperrvorrichtung (A) vor. Dies kann beispielsweise über personalisierte RFID-Karten erfolgen, die von den Kunden unmittelbar in Berührkontakt mit der für den Lesezugriff entsprechend ausgestatteten Sperrvorrichtung des zu mietenden Fahrrads gebracht werden. Gemäß einer zweiten Ausführungsvariante ist auch eine Datenerfassung durch die lokale Kontrolleinrichtung (B) denkbar. Diese ist dann mit Ein-/Ausgabevorrichtungen zur Kommunikation mit den Kunden des Vermietsystems, z.B. in Form von Bildschirmen, Tastaturen oder Kartenlesegeräten, ausgerüstet.

Es ist diesen beiden Varianten gemeinsam, dass die kunden- bzw. vorgangsspezifischen Daten über die zwischen der Sperrvorrichtung bzw. der lokalen Kontrolleinrichtung und der Verwaltungseinrichtung bestehenden drahtlosen Kommunikationsverbindungen an die Verwaltungseinrichtung übertragen werden müssen. Zur Vermeidung des hierfür erforderlichen Aufwands sieht eine weitere Ausführungsvariante aber auch eine direkte Datenerfassung durch die Verwaltungseinrichtung (C) vor. Hierzu kann beispielsweise ein in der Verwaltungseinrichtung eingehender Telefonanruf des Kunden durch geeignete Mechanismen hinsichtlich der im Telefonanruf kodierten Identität des Anrufers (z.B. durch Auswertung der International Mobile Subscriber Identity [IMSI] bei Anrufen aus GSM- oder UMTS-Mobilfunknetzen) sowie einer ebenfalls in den Telefonanruf integrierbaren Kodierung für die Identität des vom Kunden ausgewählten Fahrrades ausgewertet und diese für den Verleihvorgang spezifischen Daten sodann unmittelbar weiter verarbeitet werden.

Sobald in der Verwaltungseinrichtung (C) ein Mietvorgang über ein konkretes Fahrrad erfolgreich authentifiziert und autorisiert wurde, wird ein diesbezügliches Signal (1) zur Kennzeichnung einer erfolgreichen Autorisierung von der Verwaltungseinrichtung an die lokale Kontrolleinrichtung übermittelt und dort zwischengespeichert (2). Diese Zwischenspeicherung dauert solange an, bis ein von der Sperrvorrichtung (A) des Fahrrades ausgesandtes Aktivierungssignal (3) in der lokalen Kontrolleinrichtung empfangen wird. Ein solches Aktivierungssignal wird dadurch erzeugt, dass der Kunde die Sperrvorrichtung des von ihm gewünschten Fahrrades durch eine manuelle Bedienhandlung (z.B. Drücken einer Taste) aufweckt und auf diese Weise von einem energie-verbrauchsoptimierten Modus in einen benutzungs- und empfangsbereiten Modus überführt. Erst nach Empfang dieses Aktivierungssignals wird dann ein Steuerungssignal (4) zur Öffnung der Sperrvorrichtung von der lokalen Kontrolleinrichtung (B) über die erste Kommunikationsverbindung an die Sperrvorrichtung (A) des Fahrrades übertragen.

### Bezugszeichenliste:

- 1: Signal zur Kennzeichnung einer erfolgreichen Autorisierung
- 2: Zwischenspeicherung des Signals (1)
- 3: Aktivierungssignal
- 4: Steuerungssignal zur Öffnung der Sperrvorrichtung (A)
- 5: Signal zur Kennzeichnung eines Abbruchs des Mietvorganges
- (A): Sperrvorrichtung
- (B): lokale Kontrolleinrichtung / ortsfestes Bedienterminal
- (C): Verwaltungseinrichtung / Back End

## Patentansprüche

1. Verfahren zum automatisierten Verwalten und Bevorraten von Mietobjekten an einem Zwischenlagerungsort, bei dem eine zur Blockierung des Mietobjektes gegen unberechtigte Benutzung geeignete Sperrvorrichtung (A) über eine erste Kommunikationsverbindung von einer lokalen Kontrolleinrichtung (B) am Zwischenlagerungsort angesteuert wird sowie eine selektive Autorisierung von Mietvorgängen in einer mit der lokalen Kontrolleinrichtung über eine zweite Kommunikationsverbindung verbundenen Verwaltungseinrichtung (C) erfolgt,
**dadurch gekennzeichnet, dass**
ein von der Verwaltungseinrichtung (C) generiertes und über die zweite Kommunikationsverbindung an die lokale Kontrolleinrichtung (B) am Zwischenlagerungsort übertragenes Signal (1) zur Kennzeichnung einer erfolgreichen Autorisierung eines Mietvorgangs über ein konkretes Mietobjekt in der lokalen Kontrolleinrichtung zwischengespeichert (2) und erst nach Empfangen eines von der diesem Mietobjekt zugeordneten Sperrvorrichtung (A) an die lokale Kontrolleinrichtung ausgesandten Aktivierungssignals (3) ein Steuerungssignal (4) zur Öffnung der Sperrvorrichtung von der lokalen Kontrolleinrichtung über die erste Kommunikationsverbindung an diese Sperrvorrichtung übertragen wird.

2. Verfahren zum automatisierten Verwalten und Bevorraten von Mietobjekten an einem Zwischenlagerungsort nach Patentanspruch 1, **dadurch gekennzeichnet, dass** das Aktivierungssignal (3) in der lokalen Kontrolleinrichtung (B) zwischengespeichert wird.

3. Verfahren zum automatisierten Verwalten und Bevorraten von Mietobjekten an einem Zwischenlagerungsort nach einem der Patentansprüche 1 oder 2, **dadurch gekennzeichnet, dass** das Aktivierungssignal (3) durch eine manuelle Bedienungshandlung eines Nutzers des Mietobjektes an der Sperrvorrichtung (A) des Mietobjektes generiert wird.

4. Verfahren zum automatisierten Verwalten und Bevorraten von Mietobjekten an einem Zwischenlagerungsort nach einem der Patentansprüche 1 bis 3, **dadurch gekennzeichnet, dass** in der lokalen Kontrolleinrichtung (B) beim Zwischenspeichern (2) des Signals zur Kennzeichnung einer erfolgreichen Autorisierung ein Zeitglied aktiviert sowie bei fehlendem Empfang des Aktivierungssignals (3) innerhalb einer mittels des Zeitglieds vorgebbaren Zeitspanne ein Signal (5) zur Kennzeichnung eines Abbruchs des Mietvorganges über die zweite Kommunikationsverbindung an die Verwaltungseinrichtung übertragen wird.
